# EUROPEAN PATENT APPLICATION

(11) **EP 4 683 411 A1**
(43) Date of publication of application: **21.01.2026**
(21) Application number: 24787753.3
(22) Date of filing: 15.01.2024
(51) Int. Cl.: H04W 72/0453

(54) **TARGET OBJECT SENSING METHOD AND RELATED DEVICE**

(30) Priority: 13.04.2023 CN 202310436384
(71) Applicant: Huawei Technologies Co., Ltd., Shenzhen, Guangdong 518129 (CN)
(72) Inventor: CAI, Wenchao, Shenzhen, Guangdong 518129 (CN)
(74) Representative: Epping - Hermann - Fischer
(86) International application number: PCT/CN2024/072343
(87) International publication number: WO 2024/212646

(57) **Abstract**

This application provides a target object sensing method and a related device, and is applied to the communication field. The target object sensing method is performed by a first electronic device, and is applied to a wired communication system, where the system includes at least two nodes in a first environment, and the nodes are connected through a wired link. The method includes: obtaining first information, where the first information is information associated with a first carrier signal, and the first carrier signal is a carrier signal loaded by a first node in the at least two nodes to the wired link; determining second information that matches the first information and that is in historical information associated with the first environment, where the second information is information associated with a historically obtained second carrier signal, and information about a target object in the first environment is a known state when the second carrier signal is transmitted in the first environment; and determining, based on the known state corresponding to the second information, information about the target object in the first environment when the first carrier signal is transmitted in the first environment. This greatly reduces costs of deploying cables and devices.

## Description

This application claims priority to Chinese Patent Application No. 202310436384.0, filed with the China National Intellectual Property Administration on April 13, 2023 and entitled "TARGET OBJECT SENSING METHOD AND RELATED DEVICE", which is incorporated herein by reference in its entirety.

### TECHNICAL FIELD

This application relates to the field of communication technologies, and in particular, to a target object sensing method and a related device.

### BACKGROUND

With the development of artificial intelligence, artificial intelligence gradually penetrates into life of people and provides services for the people. In some scenarios, a prerequisite for providing services by artificial intelligence is sensing a target object (for example, a human body) in an environment, and may be specifically sensing whether there is a person in the environment, a location of the person in the environment, and the like. A conventional target object sensing method is mainly that a camera, a radar, and other technologies are used to sense a target object in an environment. However, in the conventional target object sensing method, devices such as the camera and the radar need to be additionally deployed, and costs are high.

### SUMMARY

In view of this, it is necessary to provide a target object sensing method and a related device, to reduce costs.

According to a first aspect, an embodiment of this application provides a target object sensing method, performed by a first electronic device and applied to a wired communication system, where the wired communication system includes at least two nodes in a first environment, the at least two nodes are connected through a wired link, the node is configured to transmit or receive a carrier signal, and the target object sensing method includes: obtaining first information, where the first information is information associated with a first carrier signal, and the first carrier signal is a carrier signal loaded by a first node in the at least two nodes to the wired link; determining second information that matches the first information and that is in historical information associated with the first environment, where the second information is information associated with a historically obtained second carrier signal, and information about a target object in the first environment is a known state when the second carrier signal is transmitted in the first environment; and determining, based on the known state corresponding to the second information, information about the target object in the first environment when the first carrier signal is transmitted in the first environment.

The first electronic device may be any one of the at least two nodes. Another node different from the first node in the at least two nodes are configured to receive the first carrier signal transmitted by the first node, and the information associated with the first carrier signal includes: information about the carrier signal received by the another node. In other words, the information associated with the first carrier signal includes the information about the carrier signal received by the another node, and the carrier signal received by the another node is the first carrier signal transmitted by the first node. The information associated with the first carrier may further include information about the first carrier signal transmitted by the first node. There may be one or more other nodes. If there is one other node, a receive-transmit state between the first node and the another node is single-transmit and single-receive. If there is more than one other node, a receive-transmit state between the first node and the other nodes is single-transmit and multi-receive.

Determining the second information that matches the first information and that is in the historical information associated with the first environment, that is, matching the first information with the second information, may be specifically matching information about a carrier signal received by a node, or may be matching information about a carrier signal transmitted by a node.

In this embodiment of this application, the target object is sensed by fully using nodes that are already deployed in an environment and that are connected to each other through a wired link, and there is no need to deploy a dedicated line and device, to greatly reduce costs of deploying cables and devices. In addition, the environment includes a large quantity of nodes that are connected to each other through the wired link, and there are a large quantity of nodes with wide coverage. Therefore, it is easy to implement full coverage of the environment, and the target object in the environment is accurately and efficiently sensed. The target object is sensed by using the historical information associated with the first environment, to avoid a process in which a carrier signal needs to be analyzed each time to sense the target object, reduce a calculation amount, and improve efficiency. In addition, in a process of sensing the target object, only information about a carrier signal needs to be matched, information about a related carrier signal has been stored in the historical information associated with the first environment, and only information about a carrier signal currently needed for sensing needs to be extracted. Information extraction steps are reduced, and efficiency is further improved.

Preferably, the target object sensing method further includes: obtaining, based on a first input, information about the target object in the first environment and information about a carrier signal transmitted in the first environment, where the first input is triggered by an organism, and the obtained information about the target object in the first environment and the obtained information about the carrier signal transmitted in the first environment are used to determine the historical information associated with the first environment. The historical information associated with the first environment may be obtained through triggering with sensing or triggering without sensing of the organism, so that the target object may be sensed based on the historical information associated with the first environment.

Preferably, the first input is used to indicate a third carrier signal, and the third carrier signal is a carrier signal transmitted by a second node in the wired communication system in response to triggering of the organism; and obtaining, based on the first input, the information about the target object in the first environment includes: obtaining an attribute of the second node based on the first input; and determining the information about the target object in the first environment based on the attribute of the second node.

The attribute of the second node includes one or more of the following information: spatial information of the second node in the first environment (for example, a location of the second node in the first environment), a device type, and triggering information. The device type may include the following two types: a first type that restricts a user to be located near a node for triggering (for example, the node allows only a touchscreen manner for interaction) and a second type that does not restrict a user to be located near a node for triggering (for example, the node allows the user to trigger the node to transmit a carrier signal through remote control). The triggering information includes a manner of interaction between the user and the node, key triggering or remote control triggering, and the like.

When obtaining the first input, the first electronic device may determine that the node in the wired communication system transmits the third carrier signal in response to triggering of the organism. An attribute of the node in the wired communication system is almost fixed, for example, a location of the node is almost fixed. When the node transmits the third carrier signal in response to triggering of the organism, the node may determine the information about the target object in the first environment based on the attribute of the node. For example, the node may determine that the organism exists in the first environment, and may even determine that the organism is located near the node. In this way, the information about the target object in the first environment is continuously obtained through interaction (interaction with sensing or interaction without sensing) between the organism and the node, to continuously enrich or update the historical information associated with the first environment.

Preferably, the wired communication system further includes an assistance device, the assistance device communicates with the first electronic device, and the historical information associated with the first environment includes: information that is about the target object in the first environment and that is obtained from the assistance device. The historical information associated with the first environment may be obtained by using related information that is of the target object in the first environment and that is obtained by another assistance device, so that the target object may be sensed based on the historical information associated with the first environment.

Preferably, another node different from the first node in the at least two nodes are configured to receive the first carrier signal transmitted by the first node, and the information associated with the first carrier signal includes: information about the carrier signal received by the another node, where the carrier signal received by the another node is the first carrier signal that is transmitted by the first node and that is received by the another node.

Preferably, when the first carrier signal or the second carrier signal is transmitted, a receive-transmit state of the at least two nodes includes any one of single-transmit and multi-receive, single-transmit and single-receive, or multi-transmit and multi-receive. In other words, when the information about the carrier signal (such as the first information or the second information) is obtained in a model obtaining phase (that is, a phase of obtaining the historical information associated with the first environment) and a sensing phase, the receive-transmit state of the at least two nodes included in the first environment may be controlled to be any one of single-transmit and multi-receive, single-transmit and multi-receive, or multi-transmit and multi-receive. There are one or more other nodes.

Preferably, the information about the carrier signal includes one or more of the following information: a signal power, a channel state, amplitude information, phase information, a time-frequency feature, a signal-to-noise ratio, a transmission rate, a bit error rate, and feature information, where the feature information is information obtained by performing feature extraction on one or more of the signal power, the channel state, the amplitude information, the phase information, the time-frequency feature, the signal-to-noise ratio, the transmission rate, and the bit error rate. The information about the carrier signal may reflect impact of the target object in the first environment on the carrier signal.

Preferably, the known state in the historical information associated with the first environment includes any one or more of the following states: no target object exists in the first environment, the target object exists in the first environment, a location of the target object in the first environment, a quantity of target objects in the first environment, a posture of the target object in the first environment, and a movement trajectory of the target object in the first environment. Richer information about the target object recorded in the known state indicates that the target object in the first environment can be more precisely sensed. In addition, information about the known state may be obtained through triggering with sensing or triggering without sensing of the organism, and the information about the known state may be continuously updated and enriched.

Preferably, if the wired link is a power line, the at least two nodes connected through the wired link form a power line network. Preferably, determining the second information that matches the first information and that is in the historical information associated with the first environment includes: when a similarity between the second information and the first information reaches a preset threshold, determining that the second information matches the first information; or when the second information is the same as the first information, determining that the second information matches the first information.

Preferably, the target object is a living object or a non-living body, for example, a person or a vehicle. Preferably, the target object sensing method further includes: updating, based on newly obtained information about the target object in the first environment and newly obtained information about the carrier signal transmitted in the first environment, the historical information associated with the first environment. In other words, the historical information associated with the first environment may be updated in real time based on the newly obtained information, and further the target object is sensed based on the historical information associated with the first environment.

Preferably, the first electronic device is one of the at least two nodes. Alternatively, the first electronic device is the assistance device.

According to a second aspect, an embodiment of this application provides a wired communication system, where the wired communication system includes a first electronic device and at least two nodes, the at least two nodes are connected through a wired link to form a wired network, the first electronic device communicates with the at least two nodes, the node is configured to transmit or receive a carrier signal, and the first electronic device is configured to perform the foregoing target object sensing method.

Preferably, the wired communication system further includes at least one assistance device, and the assistance device communicates with the first electronic device.

Preferably, the first electronic device accesses the wired network in a wired or wireless manner. When the first electronic device accesses the wired network in the wired manner, the first electronic device is a node in the wired network. If nodes in the wired network are connected through a power line, and the first electronic device accesses the wired network through the power line, the first electronic device is a node. When the first electronic device accesses the wired network in the wireless manner, the first electronic device is the assistance device.

According to a third aspect, an embodiment of this application provides an electronic device, where the electronic device includes a memory and at least one processor, the memory is configured to store instructions, and the processor is configured to execute the instructions to implement the foregoing target object sensing method.

According to a fourth aspect, an embodiment of this application provides a computer-readable storage medium, where the computer-readable storage medium stores a program, and the program enables an electronic device to perform the foregoing target object sensing methods.

According to a fifth aspect, an embodiment of this application provides a computer program product, where the computer program product includes computer-readable instructions, and when the computer-readable instructions are executed by one or more processors, the foregoing target object sensing method is implemented.

It may be understood that the wired communication system provided in the second aspect, the electronic device provided in the third aspect, the computer-readable storage medium provided in the fourth aspect, and the computer program product provided in the fifth aspect correspond to the method provided in the first aspect or the second aspect. Therefore, for beneficial effects that can be achieved or implementations, refer to the foregoing descriptions. Details are not described herein again.

### BRIEF DESCRIPTION OF DRAWINGS

FIG. 1 is a diagram of a structure of a wired communication system according to an embodiment of this application;
FIG. 2 is a diagram of an application scenario according to an embodiment of this application;
FIG. 3 is a schematic flowchart of a model obtaining method according to an embodiment of this application;
FIG. 4 is a schematic flowchart of a target object sensing method according to an embodiment of this application;
FIG. 5 is a diagram of a structure of a node according to an embodiment of this application; and
FIG. 6 is a diagram of a structure of an assistance device according to an embodiment of this application.

### DESCRIPTION OF EMBODIMENTS

To make the objectives, technical solutions, and advantages of this application clearer, the following further describes implementations of this application in detail with reference to the accompanying drawings.

As described above, in a conventional target object sensing method, a device needs to be additionally deployed to sense a target object, and costs are high.

In view of this, this application provides a target object sensing method and a related device, to sense a target object by using a power line communication (Power Line Communication, PLC) technology. Power line communication is a technology that uses a power line to perform data transmission. A node on the power line may load a carrier signal to a wired link, and both the node and the wired link may radiate energy of the carrier signal to a surrounding environment. In this case, the environment is filled with carrier signals (electromagnetic waves), and a target object in the environment may be sensed by analyzing the carrier signals. In this application, the target object is sensed by fully using a wired network (for example, a power line network) already deployed in the environment, and there is no need to deploy a dedicated line and device, to greatly reduce costs of deploying cables and devices. In addition, the wired network includes a large quantity of devices, and has wide coverage. Therefore, it is easy to implement full coverage of the environment, and the target object in the environment is accurately and efficiently sensed.

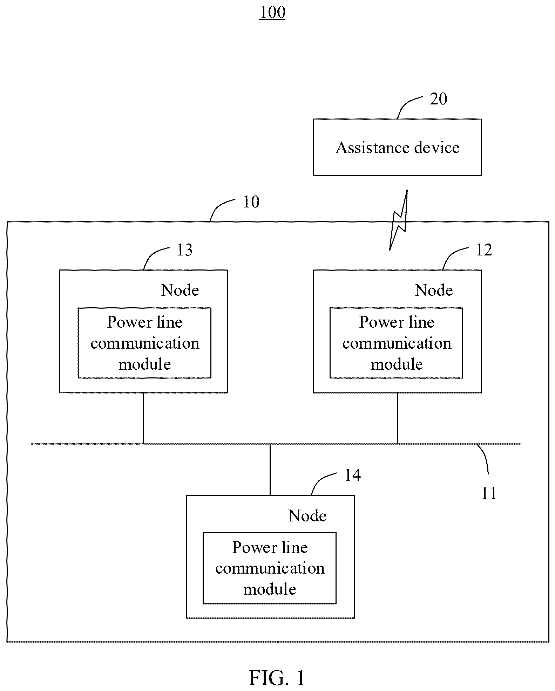

Refer to FIG. 1. A wired communication system 100 provided in an embodiment of this application is described by using an example.

The wired communication system 100 includes a wired network 10. The wired network 10 includes at least two nodes (a node 12, a node 13, and a node 14 shown in FIG. 1), and the at least two nodes are connected through a wired link. The at least two nodes may communicate with each other through the wired link and/or a wireless link, that is, a communication manner between the at least two nodes includes a wired manner and/or a wireless manner. The wired link may be implemented as a power line, a coaxial cable, an optical cable, a twisted pair cable, or another appropriate wired medium. Wireless link communication may be implemented as follows: A node propagates a carrier signal through air.

In this embodiment of this application, as shown in FIG. 1, the wired link in the wired network 10 may be a power line 11. When the wired link in the wired network 10 is the power line 11, the wired network 10 is also referred to as a power line network. When the power line 11 is used as a channel for data transmission, the nodes in the wired network 10 may perform data transmission through the power line 11.

The node may be a node defined in a communication network field standard such as an ITU-T G.hn standard or an IEEE HomePlug standard. A technology type and a protocol type of wired communication are not specifically limited in this application, and a technology type and a protocol type of power line communication are not specifically limited in this application. The node may be a central coordinator (Central Coordinator, CCO), a station (station, STA), a proxy coordinator (Proxy Coordinator, PCO), a domain master (domain master, DM), an end point (end point, EP), or the like. The node may alternatively be another type of node. This is not limited in this application.

The central coordinator is also referred to as a central node, and is responsible for networking control, network maintenance and management, network access authentication of a node, data information exchange, and the like. The station and the end point are responsible for network access. The proxy coordinator is also referred to as a relay node or a proxy node, and is responsible for data relay forwarding, for example, responsible for performing data relay forwarding between the central coordinator and the station, between stations, or between the domain master and the end point. The domain master is a main controller in a domain (domain), and is responsible for managing or coordinating another node in the domain. The wired network 10 may include one or more domains, and the domain is a network part obtained by logically dividing the wired network 10.

For example, in the G.hn standard related to the power line network, the wired network 10 may include the domain master and the end point. In the IEEE 1901.1 standard related to the power line network, the wired network 10 may include the central coordinator and the station. A type of the node included in the wired network 10 is not specifically limited in this application.

In this embodiment of this application, physical networking of the wired network 10 includes a star topology structure, a tree topology structure, a chain topology structure, a ring topology structure, and the like. This is not specifically limited in this application.

Each node that sends or receives a data signal through the wired link in the wired network 10 includes a corresponding communication module, and the node sends and receives a packet based on the communication module. The communication module may be set based on a specific case. This is not specifically limited in this application.

In this embodiment of this application, the node has a power line carrier communication function, and may implement functions such as receiving or sending a packet in the wired network 10. In the wired network 10 shown in FIG. 1, the node that sends or receives the data signal through the power line 11 includes a power line communication module. The power line communication module is connected to the power line 11. The node sends a packet to another node in the wired network 10 through the power line communication module, or receives a packet sent by another node in the wired network 10.

For example, the packet may be a null data packet (null data packet, NDP), or may be a physical layer protocol data unit (physical layer protocol date unit, PPDU). This is not specifically limited in this application.

The power line communication module may include a PLC media access control (media access control, MAC) communication module and a physical layer (physical layer, PHY) communication module, and is responsible for performing framing, modulation, and demodulation on a PLC carrier signal. The power line communication module may be a chip that implements a PLC communication protocol, for example, a dedicated PLC chip, and may include a module or a circuit that implements PLC MAC and PHY communication, and a module or a circuit that implements framing, modulation, and demodulation on the PLC carrier signal. An implementation form of the power line communication module is not specifically limited in this application.

In this embodiment of this application, the node may be configured to transmit or receive a carrier signal. The node may transmit the carrier signal by loading the carrier signal to the wired link. A loading manner includes but is not limited to: coupling and another manner of modulating a signal to the wired link. Specifically, the node transmits and receives the carrier signal through the power line communication module. The node 11 and the node 12 are used as an example. A power line communication module of the node 11 performs modulation carrier encoding on a video signal, an audio signal, or the like to obtain a carrier signal, and the node 11 transmits the carrier signal to the node 12. If the power line communication module of the node 11 couples the carrier signal to the power line 11, the carrier signal may be transmitted to the node 12 through the power line 11. The carrier signal may alternatively be propagated through air. For example, when the carrier signal is transmitted on the power line 11, the power line 11 into which the carrier signal is injected radiates energy of the carrier signal to the outside (for example, an environment in which the power line 11 is located), and then the radiated energy of the carrier signal is propagated to the node 12 through air. The carrier signal that is transmitted by the node 11 and received by the node 12 includes the carrier signal transmitted through the power line 11 and/or the carrier signal propagated through the air. A power line communication module of the node 12 decodes the received carrier signal to obtain the video signal or the audio signal transmitted by the node 11.

In this embodiment of this application, the node in the wired network 10 may receive the carrier signal in a sleep state or a working state except that the node is powered off. Therefore, the carrier signal received by the node may be directly obtained from each node.

For example, a frequency unit of the carrier signal may be megahertz (Megahertz, MHz) or gigahertz (Gigahertz, GHz). In some embodiments, a frequency of the carrier signal may be a low frequency, for example, 3 kHz to 500 kHz. An operating frequency band of the carrier signal is not specifically limited in this application.

In this embodiment of this application, a device entity of the node may be any communication device that can support communication through the power line 11, for example, a router, a gateway, a modem (digital subscriber line, DSL), an optical network terminal (optical network terminal, ONT), or a wireless access point (access point, AP) in a home application scenario, or various sensors and smart devices in an enterprise application scenario or an internet of things scenario. This is not specifically limited in this application. The modem may be specifically a power line communication modem (modem) or another type of power line communication modem. This is not specifically limited in this application.

The power line 11 is a transmission medium in the wired network 10, and is configured to implement data transmission or communication. The power line 11 means a cable having a power transmission function, and includes but is not limited to the following cable types: a parallel cable, an optoelectronic composite cable, a coaxial cable, a twisted pair, a triple twisted cable, an electric power cable, a control cable, a special cable, and the like. This is not specifically limited in this application.

In some embodiments, the wired communication system 100 may include an assistance device 20, and the assistance device 20 may access the wired network 10 in a wired or wireless manner. For example, the assistance device 20 may be communicatively connected to any node in the wired network 10 by using a communication network such as a wired network (Wired network) or a wireless network (wireless network). The communication network may be a local area network (local area network, LAN), or a wide area network (wide area network, WAN) (for example, the internet). Specifically, the communication network includes but is not limited to: a Wi-Fi hotspot network, a Wi-Fi peer to peer (peer to peer, P2P) network, a Bluetooth network (including classic Bluetooth and Bluetooth low energy (Bluetooth Low Energy, BLE)), a ZigBee (ZigBee) network, or a near-field communication (Near-field communication, NFC) network, or other communication networks. A communication connection manner between the assistance device 20 and the node in the wired network 10 is determined based on an actual situation, for example, specifically determined based on the assistance device 20 and a node connected to the assistance device 20. This is not specifically limited in this application.

In some embodiments, the assistance device 20 is implemented as a terminal device. The terminal device includes but is not limited to a mobile phone, a tablet, a notebook computer, a desktop computer, an all-in-one machine, a virtual reality (virtual reality, VR) device, an augmented reality (augmented reality, AR) device, a smartwatch, a smart band, and the like. A type of the terminal device is not specifically limited in this application.

Any one of the foregoing nodes may communicate with the terminal device. For example, the node is implemented as a smart device, and the smart device may send a captured image/video or information of another type to the terminal device. The terminal device may make a decision based on received information about the smart device, and further send information such as a control instruction to the smart device. For another example, a user outputs a corresponding control instruction to the smart device via the terminal device. The smart device may change a working state or perform a function in response to the control instruction received by the smart device.

In some embodiments, the assistance device 20 is implemented as a central device. The central device may be an independent electronic device dedicated to performing intelligent decision-making and controlling each device in a power communication system, for example, an intelligent central control device installed in a home of the user. Any one of the foregoing nodes may communicate with the central device. For example, the node is implemented as a smart device, and the smart device may send a captured image/video or information of another type to the central device. The central device may make a decision based on received information about the smart device, and further send information such as a control instruction to the smart device. The smart device may change a working state or perform a function in response to the control instruction received by the smart device. For another example, the assistance device 20 includes the terminal device and the central device, and the terminal device may communicate with the central device. The user outputs corresponding information to the central device via the terminal device, and the central device changes a working state or performs a function in response to the received information.

In some other implementations, the central device may be a software program, and may be installed in an existing electronic device in the home of the user, so that the electronic device further has central device functions of performing intelligent decision-making, and controlling the smart device, and the like based on an existing function of the electronic device. For example, the software program of the central device may be installed in a router, a smart large screen, or a smart television.

In some embodiments, the assistance device 20 is implemented as a cloud server. The assistance device 20 may include a central device and/or a terminal device and/or a cloud server. The central device and/or the terminal device and/or any one of the foregoing nodes may send received information to the cloud server, and the cloud server performs calculation processing. Then, the cloud server sends a processing result or a control instruction to the central device and/or the terminal device and/or the node, and the central device and/or the terminal device forwards the processing result or the control instruction to the smart device.

In some embodiments, the assistance device 20 is implemented as a smart device, and the smart device includes but is not limited to a robot, a smart home device (such as a smart refrigerator, a smart refrigerator, a smart toilet, a smart oven, or a robotic vacuum cleaner), a sensor, and the like. When the smart device does not access the wired communication system 100 through the power line 11, the smart device plays a role of the assistance device 20 in the wired communication system 100. When the smart device accesses the wired communication system 100 through the power line 11, the smart device plays a role of the node in the wired network 10 in the wired communication system 100.

In this embodiment of this application, there may be one or more assistance devices 20 in the power communication system, and the assistance device 20 may include one or more of the terminal device, the sensor, or the cloud server.

In this embodiment of this application, the assistance device 20 may communicate with the central coordinator or the domain master. For example, the node 12 shown in FIG. 1 is the domain master, and the assistance device 20 communicates with the node 12.

In some embodiments, the node in the wired network 10 may have the foregoing central device function, for example, the central coordinator or the domain master has the central device function.

It should be noted that a connection manner and a quantity of nodes in FIG. 1 are merely examples for description, and do not constitute a limitation on embodiments of the present invention.

In this embodiment of this application, a principle of sensing a target object by using a power line communication technology is as follows: When a carrier signal in the wired communication system 100 is transmitted in an environment, phenomena such as reflection, diffraction, scattering, attenuation, and multipath occur due to existence of the target object (a person or a thing) in the environment, so that features such as an amplitude, a phase, and a spectrum of a received carrier signal change. The changed features of the carrier signal are detected and analyzed. In this way, information such as whether the target object exists, and a location and a state of the target object can be inferred to sense the target object. Specifically, the node in the wired network 10 loads the carrier signal to the power line 11. The power line 11 has a specific length. For example, the length of the power line 11 is equivalent to a length of an electromagnetic wave below 30 MHz, and no shielding measure is taken on the power line 11. In this case, the power line 11 is equivalent to an "antenna". Therefore, the power line 11 into which the carrier signal is injected radiates energy of the carrier signal to surrounding space of the power line 11. Alternatively, after the node (for example, the modem) obtains a carrier signal through modulation, the node may also radiate energy of the carrier signal to surrounding space of the node. Therefore, an environment (for example, air) in which the wired communication system 100 is located is filled with carrier signals (electromagnetic waves) radiated by the power line 11 and/or the node, and the target object in the environment can be sensed by analyzing the carrier signals (for example, the carrier signals transmitted in the air) transmitted in the environment. For example, the target object in the environment can be sensed by analyzing the carrier signal transmitted by the node and the carrier signal received by another node (including the carrier signals received through the power line and the air).

In this embodiment of this application, when the target object is sensed according to the target object sensing method provided in this application, the transmitted carrier signals are transmitted through the wired link (for example, the power line) and the wireless link (for example, the air). When signal quality of the carrier signal obtained based on the wireless link is poor, the carrier signal with good signal quality may be stably obtained through the wired link (for example, the power line), to improve stability and reliability of sensing the target object and ensure timeliness and accuracy of subsequent sensing.

The target object sensing method and the related device provided in embodiments of this application may be applied to a home application scenario, an office application scenario, a school application scenario, a supermarket application scenario, a warehouse application scenario, a parking lot application scenario, and the like, to sense a target object in an environment in the foregoing application scenarios. It may be understood that the target object sensing method and the related device provided in embodiments of this application are not limited to the foregoing application scenarios, and are applicable to any environment in which the target object needs to be sensed.

The target object sensed according to the target object sensing method and the related device provided in embodiments of this application includes an organism and a non-organism, for example, may be a person or a vehicle. This is not specifically limited in this application, and may be determined based on an actual situation.

It should be noted that the system architecture shown in FIG. 1 is merely an example for better describing the system architecture provided in the target object sensing method provided in this application, and does not constitute a limitation on embodiments of this application.

The following uses an example in which the system architecture shown in FIG. 1 is applied to a home application scenario for description, to describe an example of a target object sensing application scenario provided in embodiments of this application.

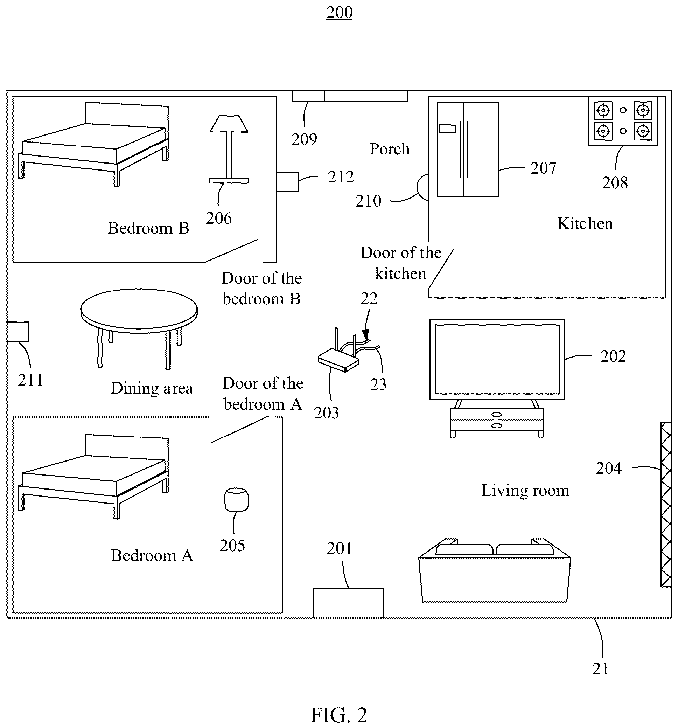

In the home application scenario, various types of devices are disposed indoors, and each device (for example, a smart refrigerator or a smart screen) may have a built-in power line communication module to become a node included in a power line network. As shown in FIG. 2, a home of a user is a first environment 200, and various types of devices are disposed in the first environment 200. For example, a whole-home smart host 201, a smart television 202, a router 203, and a smart curtain 204 are disposed in an area of a living room, a smart speaker 205 is disposed in an area of a bedroom A, a smart desk lamp 206 is disposed in an area of a bedroom B, a smart refrigerator 207 and a smart stove 208 are disposed in an area of a kitchen, and a smart door lock 209 is installed on a door, a first smart lamp 211 is installed in a dining area, and a camera 210 and a second smart lamp 212 are installed on a porch wall.

A wired communication system 21 in the first environment 200 includes a power line network 22 and an assistance device (for example, the smart door lock 209 and the camera 210). The power line network 22 includes the whole-home smart host 201, the smart television 202, the router 203, the smart curtain 204, the smart speaker 205, the smart desk lamp 206, the smart refrigerator 207, the smart stove 208, the first smart lamp 211, and the second smart lamp 212 that are connected through a power line 23. Each device in the power line network 22 has a built-in power line communication module, and the devices in the power line network 22 may communicate with each other through the power line 23. In the power line network 22, the whole-home smart host 201 serves as a central coordinator, and a device other than the whole-home smart host 201 in the power line network 22 serves as a station. The whole-home smart host 201 has a central device function, and may communicate with another device in the wired communication system 21, for example, communicate with the smart door lock 209 and the camera 210.

In the home application scenario, an installation or placement location of each device may correspond to coordinates in a home coordinate system. The home coordinate system may be a coordinate system determined in a whole-home pre-installation phase, and the coordinate system may preferably be three-dimensional or two-dimensional. Installation or placement locations of walls, doors, windows, lamps, furniture, household appliances, and smart devices in a house may be represented by coordinates in the home coordinate system. In addition, a real-time location of an active object (for example, a family member or a pet) in the house may also be obtained in real time after a device (for example, each device in the power line network) in the wired communication system 21 performs target sensing, or a location of a target object may be represented by coordinates in the home coordinate system.

In some embodiments, location information of each device in the first environment may be prestored. For example, the smart speaker 205 is stored in the area in the bedroom A. The location information of each device may be uploaded by the user or a technician. Alternatively, the location information of each device may be determined based on signal transmission between nodes in the power line network and determined node location information. If both the smart television 202 and the router 203 in FIG. 2 receive carrier signals transmitted by the smart curtain 204, and strengths of the received carrier signals are similar, it may be determined that the smart television 202 and the router 203 are located in a same area (living room). Alternatively, location information of a device in the first environment may be obtained via the assistance device. If the camera 210 identifies a photographed image and identifies the second smart lamp 212, the camera 210 may upload location information of the second smart lamp 212, or the camera 210 uploads the image photographed by the camera 210. It may be determined based on location information of the camera 210 that both the smart door lock 209 and the camera 210 are located in a same area (porch).

For content of the wired communication system 21, the power line network 22, the node, and the power line 23, refer to related content in FIG. 1. Details are not described herein again.

It should be understood that FIG. 2 is merely used as an example of the home application scenario, but is not a limitation. It is set based on an actual situation that more or fewer devices than those shown in FIG. 2 and/or devices of different types from those shown in FIG. 2 may be installed in the first environment 200.

The following describes a target object sensing method provided in embodiments of this application. The target object sensing method may be applied to the foregoing wired communication system or wired network (the power line network shown in FIG. 2). The target object sensing method may be performed by a first electronic device. The first electronic device may be any node in the wired network, for example, may be a central coordinator or a domain master. The first electronic device may alternatively be an assistance device accessing the wired network, for example, a central device.

The following uses an example in which the central coordinator performs the target object sensing method in this application and a target object is a human body for description.

The target object sensing method provided in embodiments of this application is used to sense a target object in a first environment. The target object sensing method provided in embodiments of this application mainly includes a model obtaining phase and a sensing phase. In the model obtaining phase, related data in the first environment is mainly collected, and the related data is processed to obtain a sensing model. In the sensing phase, the sensing model is mainly used to sense the target object in the first environment. The model obtaining phase includes an establishment sub-phase and an update sub-phase. The establishment sub-phase is used to establish the sensing model. The update sub-phase is used to update an existing sensing model, for example, update the sensing model established in the establishment sub-phase, or re-update a sensing model that has been updated in a previous update sub-phase. The establishment sub-phase is before the sensing phase, and the update sub-phase is before the sensing phase, or the update sub-phase is simultaneous with the sensing phase, or the update sub-phase is after the sensing phase.

### Model obtaining phase

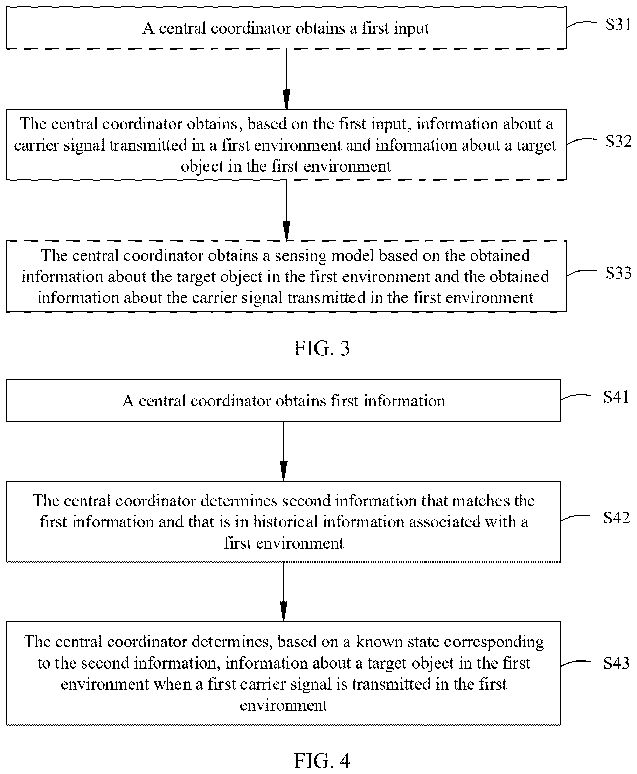

Refer to FIG. 3. A model obtaining method provided in an embodiment of this application is described by using an example.

Step S31: A central coordinator obtains a first input.

In this embodiment of this application, the first input indicates to obtain information associated with a first environment, and the information associated with the first environment includes one or more of the following information: information about a target object in the first environment and information about a carrier signal transmitted in the first environment. The first environment is an environment in which an execution body (the central coordinator) is located. As shown in FIG. 2, the whole-home smart host 201 serves the central coordinator, and the first environment 200 in which the whole-home smart host 201 is located is the first environment. In this case, a first input obtained by the whole-home smart host 201 indicates to obtain information associated with the first environment 200.

The first input includes one or more of the following inputs: an input from an organism (such as a user), an input from any node in a power line network, and an input from an assistance device. The assistance device does not access the power line network through a power line, and the assistance device may communicate with the central coordinator by using the foregoing wired network or wireless network. A form of the first input may be a voice input, a touch input, an instruction from another device (for example, a node or the assistance device), a received signal (for example, a carrier signal), information that it is detected that a node receives a carrier signal, or the like. The form of the first input is not specifically limited in this application.

In this embodiment of this application, after enabling a sensing function, the central coordinator may obtain the first input, that is, may obtain the information associated with the first environment, and further establish a sensing model based on the obtained information associated with the first environment, or update the sensing model, or sense a target object in an environment based on the sensing model, or update the sensing model and sense the target object in the environment, or establish the sensing model and sense the target object in the environment. For example, when the central coordinator is implemented as the whole-home smart host 201, a control interface of the whole-home smart host 201 provides a "sensing" option, and the whole-home smart host 201 enables the sensing function in response to selecting the "sensing" option by the user. After enabling the sensing function, the whole-home smart host 201 obtains the first input, to obtain the information associated with the first environment 200.

In some embodiments, the central coordinator may enable the sensing function by default.

Step S32: The central coordinator obtains, based on the first input, the information about the carrier signal transmitted in the first environment and the information about the target object in the first environment.

The information about the carrier signal may include one or more of the following: a signal power, a channel state (channel state information, CSI), amplitude information, phase information, a time-frequency feature, a signal-to-noise ratio, a transmission rate, a bit error rate, and feature information. In other words, first information may be any one or more of a signal power, a channel state, amplitude information, phase information, a time-frequency feature, a signal-to-noise ratio, a transmission rate, a bit error rate, and feature information of a first carrier signal.

The feature information is feature information obtained by performing feature extraction on any one or more of the following physical information: the signal power, the channel state, the amplitude information, the phase information, the time-frequency feature, the signal-to-noise ratio, the transmission rate, and the bit error rate of the carrier signal. For example, the physical information is input into a preset model, to perform feature extraction on the physical information based on a parameter of the preset model to obtain the feature information. The preset model may be a deep learning model. The preset model may include two parts: an encoder (Encoder) and a decoder (Decoder) of a transformer. For content of the feature information obtained by performing feature extraction on the physical information, refer to the existing related technology. A type of the preset model and a feature extraction manner are not specifically limited in this application.

The carrier signal transmitted in the first environment may be transmitted through a power line and/or transmitted through air. The carrier signal transmitted in the first environment includes a carrier signal that is transmitted by a transmitting end and received by a receiving end, and may further include a carrier signal transmitted by the transmitting end. In this case, the information about the carrier signal transmitted in the first environment includes information about the carrier signal that is transmitted by the transmitting end and received by the receiving end, that is, information about the carrier signal received by the receiving end, and may further include information about the carrier signal transmitted by the transmitting end. In other words, the carrier signal transmitted in the first environment may be information about a transmitted carrier signal, or may be information about a received carrier signal, or may be information about a transmitted carrier signal and information about a received carrier signal, and the transmitted carrier signal is associated with the received carrier signal.

The receiving end may include one or more nodes in the first environment, and the transmitting end may include one or more nodes in the first environment. The information that is about the carrier signal transmitted in the first environment and that is obtained by the central coordinator based on the first input includes: information about a carrier signal transmitted by any one or more nodes, or information about a carrier signal received by any one or more nodes, or information about a carrier signal transmitted by any one or more nodes and information about a carrier signal received by any one or more nodes.

Preferably, the information that is about the carrier signal transmitted in the first environment and that is obtained by the central coordinator is the information about the carrier signal received by the any one or more nodes. In some embodiments, the information that is about the carrier signal transmitted in the first environment and that is obtained by the central coordinator may further include the information about the carrier signal transmitted by the any one or more nodes, so that the central coordinator obtains, based on the information about the transmitted carrier signal, more complete information about the carrier signal transmitted in the first environment. In this embodiment of this application, when the central coordinator obtains the carrier signal transmitted in the first environment, a receive-transmit state of a node in a wired communication system or the power line network includes any one of single-transmit and multi-receive, single-transmit single-receive, or multi-transmit and multi-receive.

In some embodiments, for a same node, when the node cannot transmit a carrier signal, the node may further receive a carrier signal transmitted by another node.

In this embodiment of this application, the information about the carrier signal may reflect impact of the target object in the first environment on the carrier signal. Specifically, because phenomena such as reflection, diffraction, scattering, attenuation, and multipath occur due to existence of the target object (a person or a thing) in the first environment, features such as an amplitude, a phase, and a spectrum of a received carrier signal change, and then the target object in the first environment may be sensed by analyzing information about the received carrier signal.

The information about the target object in the first environment includes related information of the target object, such as the target object exists in the first environment, no target object exists in the first environment, a location of the target object in the first environment, a quantity of target objects in the first environment, a movement trajectory of the target object in the first environment, and a posture of the target object in the first environment.

It may be understood that, in a proper case, the information about the target object in the first environment may include at least two of the foregoing information. For example, the information about the target object in the first environment includes the location of the target object in the first environment and the quantity of target objects in the first environment.

Step S33: The central coordinator obtains the sensing model based on the obtained information about the target object in the first environment and the obtained information about the carrier signal transmitted in the first environment.

In this embodiment of this application, the information that is about the target object in the first environment and that is obtained by the central coordinator after step S32 is performed is known information about the target object. That is, the information that is about the target object and that is obtained in step S32 may be used to determine whether the target object exists in the first environment, the location of the target object, the quantity of target objects, the movement trajectory of the target object, the posture of the target object, and the like.

In this embodiment of this application, the information that is about the carrier signal transmitted in the first environment and that is obtained by the central coordinator after step S32 is performed is known or specific information about the carrier signal. That is, the information that is about the carrier signal transmitted in the first environment and that is obtained in step S32 may be used to determine the carrier signal transmitted in the first environment and determine any one or more of the following information of the carrier signal: the signal power, the channel state (channel state information, CSI), the amplitude information, the phase information, the time-frequency feature, the signal-to-noise ratio, the transmission rate, the bit error rate, the feature information, and the like.

In this embodiment of this application, the information (referred to as a known state below) about the target object in the first environment and the information (referred to as known information below) about the carrier signal transmitted in the first environment that are obtained by the central coordinator are used to obtain historical information associated with the first environment. The historical information associated with the first environment may be used to establish the sensing model, update the sensing model, or sense the target object in the first environment, or update the sensing model and sense the target object in the first environment, or establish the sensing model and sense the target object in the first environment. For example, in a sensing phase, the central coordinator obtains, based on the historical information associated with the first environment, finally obtained known information and a finally obtained known state, and then obtains, based on the finally obtained known information and known state, new historical information associated with the first environment. The new historical information associated with the first environment may be used to establish the sensing model, update the sensing model, or perform next sensing.

In some embodiments, the central coordinator updates, based on newly obtained information about the target object in the first environment and newly obtained information about the carrier signal transmitted in the first environment, the historical information associated with the first environment. In other words, the historical information associated with the first environment may be updated in real time based on the newly obtained information, and further the target object is sensed, the sensing model is updated, and the like based on the historical information associated with the first environment.

For example, only a carrier signal a is transmitted in the first environment at a moment T1, and the central coordinator obtains known information (information associated with the carrier signal a) and a known state (information about the target object in the first environment when the carrier signal a is transmitted in the first environment) in the first environment, may determine that the known information related to the carrier signal a and the known state that are obtained at the same moment or in a same time period (for example, within 3 seconds) are associated, and establish or update the sensing model based on the known information and the known state that are obtained at the moment T1. After a period of time starting from the moment T1, for example, only a carrier signal b is transmitted in the first environment at a moment T2, the central coordinator obtains known information (information associated with the carrier signal b) and a known state (information about the target object in the first environment when the carrier signal b is transmitted in the first environment) in the first environment, may determine that the known information related to the carrier signal b and the known state that are obtained at the same moment or in a same time period (for example, within 3 seconds) are associated, and establish or update the sensing model based on the known information and the known state that are obtained at the moment T2.

In this embodiment of this application, the central coordinator establishes the sensing model or updates the sensing model based on the obtained historical information associated with the first environment. For example, when the central coordinator obtains the first input when no sensing model exists, the central coordinator obtains, based on the first input, the historical information associated with the first environment, and then the central coordinator establishes the sensing model based on the obtained historical information associated with the first environment. For another example, when the central coordinator obtains the first input when the sensing model exists, the central coordinator obtains, based on the first input, the historical information associated with the first environment, and then the central coordinator updates the existing sensing model based on the obtained historical information associated with the first environment. For another example, when the central coordinator obtains the first input when the sensing model exists, the central coordinator senses the target object in the first environment by using the sensing model, and finally obtains known information and a known state. Then, the central coordinator updates the sensing model based on the known information and the known state that are obtained through sensing. In this embodiment of this application, that the central coordinator obtains the sensing model based on the obtained historical information associated with the first environment includes: The central coordinator establishes the sensing model based on the known information and the known state that are associated with each other in the obtained historical information associated with the first environment. Alternatively, the central coordinator updates the sensing model based on the known information and the known state that are associated with each other in the obtained historical information associated with the first environment.

In this embodiment of this application, there is a correspondence between the known state and the known information that are obtained by the central coordinator based on the first input. In other words, the known information and the known state that are obtained based on the first input are associated with each other. Both the known state and the known information are related to the corresponding first input. For example, a first input a and a first input b are included. A known state a1 and known information a2 that are obtained by the central coordinator based on the first input a are related to the first input a, and the known state a1 is associated with the known information a2. A known state b1 and known information b2 that are obtained by the central coordinator based on the first input b are related to the first input b, and the known state b1 is associated with the known information b2. In this embodiment of this application, both the known state and the known information that are associated with each other are related to the first environment. For example, the known information a2 is information about a carrier signal a3 transmitted in the first environment. When the carrier signal a3 is transmitted in the first environment, the information about the target object in the first environment is the known state a1. In other words, when the information about the target object in the first environment is the known state a1, the obtained information about the carrier signal transmitted in the first environment is the known information a2. In other words, when the obtained information about the carrier signal transmitted in the first environment is the known information a2, the information about the target object in the first environment is the known state a1. In some embodiments, a living body and a non-living body have inconsistent impact on a carrier signal transmitted in an environment, so that features such as an amplitude, a phase, and a spectrum of the carrier signal affected by the living body and the non-living body are also different. For example, phenomena such as reflection, diffraction, scattering, attenuation, and multipath caused by a person and a smart refrigerator in a same environment on an electromagnetic wave are different, and correspondingly, features such as an amplitude, a phase, and a spectrum of the electromagnetic wave affected by the person or the smart refrigerator are also different. Therefore, in this embodiment of this application, target objects associated with the known information and the known state that are associated are of a same type, that is, the known information is information about the carrier signal after the person affects the carrier signal, and the information about the target object corresponding to the known state is also related information of the person, such as a location of the person and a quantity of persons.

For example, the target object is a human body. When the known state a is that there is no person in the first environment, a carrier signal A transmitted in the first environment is obtained, and then corresponding information B about the carrier signal is obtained. In this case, it may be learned that known information corresponding to the known state a is the information B about the carrier signal. For another example, when the known state b is that there is one person in the first environment, a carrier signal C transmitted in the first environment is obtained, and then corresponding information D about the carrier signal is obtained. In this case, it may be learned that known information corresponding to the known state b is the information D about the carrier signal. In this embodiment of this application, the known information and the known state that are associated with each other are related in terms of time, space, and the target object. In other words, the known information and the known state that are associated with each other correspond to the same (consistent) time, space, and target object.

The sensing model may be a model statistically obtained based on obtained data (the historical information associated with the first environment), and the model records the known information and the known state that are associated. In some embodiments, the model statistically obtained based on the obtained data may be implemented as a storage list or another form of recording the known information and the known state that are associated with each other is used. In some embodiments, the sensing model may alternatively be a deep learning model. The deep learning model may be a convolutional neural network (convolutional neural network, CNN), a deep belief network (Deep belief network, DBN), a stacked auto-encoder network (stacked auto-encoder network) model, or the like. A specific type of the sensing model is not specifically limited in this application.

For example, the first environment shown in FIG. 2 is used as an example. The smart television 202 transmits a carrier signal A in a first time period, the router 203 or the whole-home smart host 201 receives the carrier signal A sent by the smart television 202, and the whole-home smart host 201 obtains corresponding known information based on the carrier signal A received by the whole-home smart host 201 (or based on the carrier signal A received by the router 203). For example, the router 203 or the whole-home smart host 201 receives a packet sent by the smart television 202, and the whole-home smart host 201 extracts a preamble part in the packet received by the whole-home smart host 201, or the whole-home smart host 201 extracts a preamble part in the packet received by the router 203, or the router 203 extracts a preamble part in the packet. The whole-home smart host 201 obtains the preamble part extracted by the router 203, and the whole-home smart host 201 divides the obtained preamble part by a known sequence stored locally, to obtain the known information (channel state a1) corresponding to the received carrier signal A. When the carrier signal A is propagated in the first environment, the information (known state) about the target object in the first environment is that no target object exists, and the known state that corresponds to the carrier signal A and that is obtained by the whole-home smart host 201 is that no target object exists. Correspondingly, the smart curtain 204 transmits a carrier signal B. When the carrier signal B is propagated in the first environment, the information (known state) about the target object in the first environment is that the target object exists, and the whole-home smart host 201 obtains known information (signal power b1 and channel state b2) of the carrier signal B and a corresponding known state is that the target object exists. The smart television 202 transmits a carrier signal C in a second time period. When the carrier signal C is propagated in the first environment, the information (known state) about the target object in the first environment is that the target object is located in a living room of the first environment. The whole-home smart host 201 obtains known information (signal power c1, channel state c2, and amplitude information c3) corresponding to the carrier signal C and a corresponding known state is that the target object is located in the living room of the first environment.

The carrier signals A to C may be distinguished based on devices that transmit the carrier signals (for example, the carrier signals A and B), or if the carrier signals are all carrier signals transmitted by a same device, the carrier signals may be distinguished based on time points at which the carrier signals are transmitted (for example, the carrier signals A and C).

It may be understood that the central coordinator may further extract a payload (Payload) behind the preamble part in the packet, to obtain the information about the carrier signal, and the central coordinator may further obtain the information about the carrier signal in another manner. This is not specifically limited in this application.

For example, the sensing model is implemented as a storage list. The central coordinator obtains the sensing model based on the known information and the known state that are associated. Refer to Table 1.

**Table 1**

| Known information | | Known state |
|---|---|---|
| Carrier signal A | Channel state a1 | No target object exists in a first environment |
| Carrier signal B | Signal power b1 and channel state b2 | The target object exists |
| Carrier signal C | Signal power c1, channel state c2, and amplitude information c3 | The target object is located in a living room of the first environment |

Both Table 1 and Table 2 record historically obtained information in the first environment, that is, the sensing model includes the historical information associated with the first environment.

When the central coordinator has not obtained the sensing model, the central coordinator obtains the known information and the known state that are associated, and adds the known information and the known state that are associated to the storage list, to obtain Table 1, so that the sensing model is established. When the central coordinator has the sensing model, the central coordinator obtains the known information and the known state that are associated, and adds the known information and the known state that are associated to the storage list (such as Table 1), so that the sensing model is updated. For example, Table 1 is an existing sensing model of the central coordinator. The central coordinator further obtains known information and a known state that correspond to a carrier signal D, and records the known information and the known state of the first carrier signal D into Table 1, so that the sensing model is updated.

In some embodiments, the central coordinator may update, based on the obtained known information and the obtained known state that are associated, information recorded in the storage list, so that the sensing model is updated. For example, the central coordinator newly obtains the signal power b1 and the channel state b2 of the carrier signal B, and specifies that the corresponding known state is that the target object is located in the living room of the first environment. In this case, the central coordinator updates Table 1 to Table 2 based on the newly obtained known information and the newly obtained known state that are associated, so that the sensing model is updated.

**Table 2**

| Known information | | Known state |
|---|---|---|
| Carrier signal A | Channel state a1 | No target object exists in a first environment |
| Carrier signal B | Signal power b1 and channel state b2 | The target object is located in a living room of the first environment |
| Carrier signal C | Signal power c1, channel state c2, and amplitude information c3 | The target object is located in the living room of the first environment |

In this embodiment of this application, when the sensing model is implemented as a deep learning model, the central coordinator may train the deep learning model based on the obtained historical information associated with the first environment, in particular, train the deep learning model based on the known information and the known state that are associated in the historical information associated with the first environment, for example, may train the deep learning model by using supervised learning, perform data labeling based on the known information and the known state that are associated, and further train the model to obtain the sensing model.

When the central coordinator has not obtained the sensing model, the central coordinator uses the obtained historical information associated with the first environment as training data, and inputs the training data into a to-be-trained model for training, to obtain the sensing model. When the central coordinator has the sensing model, the central coordinator uses the obtained historical information associated with the first environment as training data, and inputs the training data into the existing sensing model to continue training the existing sensing model, to obtain an updated sensing model.

In some embodiments, the historical information associated with the first environment is the sensing model, and the target object may be sensed based on the historical information associated with the first environment, and in particular, the target object is sensed based on the known information and the known state that are associated with each other in the historical information associated with the first environment.

In some embodiments, step S33 may be implemented as follows: The central coordinator may transmit the obtained historical information associated with the first environment to a cloud server. The cloud server obtains the sensing model based on the obtained historical information associated with the first environment, and transmits the sensing model to the central coordinator. The cloud server may specifically process, with reference to the foregoing content, the obtained historical information associated with the first environment, to obtain the sensing model.

Implementation of this embodiment of this application has at least the following effects: The central coordinator obtains, in response to the first input, the known information and the known state that are associated, and establishes the sensing model based on the known information and the known state that are associated. In this way, the target object can be quickly sensed based on the sensing model subsequently, and the obtained carrier signal does not need to be analyzed. For example, when it is known based on the sensing model that when the information about the carrier signal is a, the corresponding information about the target object in the first environment is no person, the information about the carrier signal transmitted in the environment obtained next time is a, and it may be directly obtained based on the sensing model that no person exists in the first environment. The first input is not limited to an input obtained in a model obtaining phase, or may be an input obtained in the sensing phase. Further, in a process in which the central coordinator senses the target object in the first environment by using the sensing model, the central coordinator may respond to the first input in real time, and update the sensing model based on the obtained known information and the obtained known state that are associated, to improve accuracy and efficiency of the sensing model, so that the sensing model is robust.

The following specifically describes how the central coordinator obtains, based on the first input, the historical information associated with the first environment.

In this embodiment of this application, the first input may indicate related information of the carrier signal transmitted in the first environment, for example, indicate a specific carrier signal that is being transmitted in the first environment. When the first input indicates the related information of the carrier signal transmitted in the first environment, the central coordinator obtains the information (known information) about the carrier signal (that is, the carrier signal that is transmitted in the first environment and indicated by using the first input), and the central coordinator obtains the information (known state) about the target object in the first environment based on the first input, and therefore obtains, based on the first input, the known information and the known state used to determine the historical information associated with the first environment.

In this embodiment of this application, the first input may be an input generated by triggering of the organism. For example, the first input is used to indicate a third carrier signal, and the third carrier signal is a carrier signal transmitted by a second node in the wired communication system (first environment) in response to triggering of the organism. The second node may be any node in the first environment.

Based on a fixed location of a node in the wired communication system in the first environment, when the user operates the node, the node receives triggering of the user, and when the node transmits a corresponding carrier signal in response to the operation of the user, it may be determined that there is a person at the location of the node, that is, the information about the target object in the current first environment may be determined.

Specifically, an example in which the first input is used to indicate the third carrier signal is used. Another node different from the second node in the first environment receives the third carrier signal, and the another node reports the received third carrier signal (for example, reports that the another node receives the third carrier signal transmitted by the second node and reports the third carrier signal) to the central coordinator. Alternatively, if the central coordinator obtains, from the another node, the third carrier signal received by the another node (or obtains the third carrier signal and information about the third carrier signal that is transmitted by the second node and received by the another node), the central coordinator receives the first input. Alternatively, if the central coordinator receives the third carrier signal transmitted by the second node, the central coordinator obtains the first input. After the central coordinator obtains the first input, the central coordinator obtains information associated with the third carrier signal. For example, the central coordinator obtains information about the third carrier signal received by the another node from the another node, or the central coordinator obtains information associated with the third carrier signal based on the received third carrier signal, and therefore obtains, based on the information associated with the third carrier signal, the information (known information) about the carrier signal transmitted in the first environment. The central coordinator obtains an attribute of the second node based on the first input, and then determines the information (known state) about the target object in the first environment based on the attribute of the second node, for example, determines that the target object exists in the first environment, or determines that the target object is located near the second node.

The attribute of the second node includes one or more of the following information: spatial information of the second node in the first environment (for example, a location of the second node in the first environment), a device type, and triggering information. The device type may include the following two types: a first type that restricts a user to be located near a node for triggering (for example, the node allows only a touchscreen manner for interaction) and a second type that does not restrict a user to be located near a node for triggering (for example, the node allows the user to trigger the node to transmit a carrier signal through remote control). The triggering information includes a manner of interaction between the user and the node, key triggering or remote control triggering, and the like.

For example, the attribute of the second node includes the spatial information (that is, first location information) of the second node in the first environment. The central coordinator obtains the first location information based on the attribute of the second node, where the first location information is location information of the second node in the first environment. Then, the central coordinator obtains the information about the target object in the first environment based on the first location information, for example, obtains that a person exists in the first environment and/or a person exists near the location of the second node.

In this embodiment of this application, if a carrier signal transmitted by a node in the power line network in response to an operation of the organism (for example, the user) is the third carrier signal, and the node that transmits the third carrier signal is the second node. The operation of the user indicates that the user is near the second node, and the operation of the user is, for example, tapping a physical button or opening a refrigerator door. For example, when the second node is a smart refrigerator, the operation of the user may be opening a refrigerator door of the smart refrigerator.

The first environment shown in FIG. 2 is used as an example, and the second node is the smart television 202 for description. The user taps a power-on button of the smart television 202 to turn on the smart television 202, and the smart television 202 transmits the third carrier signal in response to the operation of the user (tapping the power-on button). When receiving the third carrier signal, the whole-home smart host 201 obtains the first input, and the whole-home smart host 201 obtains the information associated with the third carrier signal, such as the signal power, the channel state, the amplitude information, the phase information, the time-frequency feature, the signal-to-noise ratio, the transmission rate, the bit error rate, and the feature information, and further obtains known information corresponding to the third carrier signal. Alternatively, the router 203 receives the third carrier signal, and when detecting that the router 203 obtains the third carrier signal, the whole-home smart host 201 obtains the first input, and the whole-home smart host 201 obtains known information of the third carrier signal from the router 203. The whole-home smart host 201 obtains location information of the second node based on the second node (that is, the node that transmits the third carrier signal) indicated by the third carrier signal, that is, obtains location information of the smart television 202. The whole-home smart host 201 may obtain the location information of the smart television 202 based on a home coordinate system or a prestored location relationship between devices in the first environment. The whole-home smart host 201 determines the location information of the smart television 202 as the location of the current target object in the first environment, and the obtained information about the target object in the first environment includes: the target object exists in the first environment and/or the target object is located in an area of the smart television 202 in the first environment. Therefore, the historical information that is associated with the first environment and that is obtained by the whole-home smart host 201 based on the first input includes: the information associated with the third carrier signal and the target object being located in the area of the smart television 202 in the first environment. In some embodiments, when the second node detects that the user performs an operation on the second node and the user is located near the second node, the second node performs modulation and encoding on specific information in response to the operation of the user, to obtain the carrier signal (that is, the third carrier signal), and transmits the carrier signal. When the central coordinator decodes the carrier signal to obtain the specific information, the central coordinator may determine that the carrier signal received by the central coordinator is the third carrier signal.

In some embodiments, the specific information may be a specific identifier, and may further indicate an operation manner of the user, for example, a button or remote control. For example, the specific information is the specific identifier. When the specific information obtained through decoding includes the specific identifier, the central coordinator determines that the carrier signal is the third carrier signal. For example, the specific information indicates the operation manner of the user. When the specific information obtained through decoding includes that the user triggers the second node by using a button, the central coordinator determines that the carrier signal is the third carrier signal. On the contrary, when the specific information obtained through decoding includes that the user triggers the second node through remote control, the central coordinator may determine that the carrier signal is not the third carrier signal.

In some embodiments, the third carrier signal may be a carrier signal obtained after the node adjusts and encodes the specific information (such as an audio signal or a video signal), and the central coordinator may determine the known state based on the node that transmits the third carrier signal. For example, a smart lamp at home provides only a button for interaction with the user, and the smart lamp transmits a carrier signal after receiving an operation of the user. The central coordinator determines, based on the received carrier signal transmitted by the smart lamp and a device type of the smart lamp, that the carrier signal is the third carrier signal, and determines that the known state is that a person is located near the smart lamp.

In this embodiment of this application, the first input may indicate the information about the target object in the first environment, that is, the first input carries the information about the target object in the first environment. When the first input indicates the information about the target object in the first environment, the central coordinator obtains the information that is about the target object in the first environment and that is indicated by the first input, that is, may obtain the information (known state) about the target object in the first environment when receiving the first input. The central coordinator obtains, based on the first input, the information (known information) about the carrier signal transmitted in the first environment, and therefore obtains, based on the first input, the known information and the known state that are used to determine the historical information associated with the first environment.

In this embodiment of this application, an example in which the first input is a first instruction input by the user is used. The central coordinator obtains the information (known state) that is about the target object in the first environment and that is indicated by the first instruction, and the central coordinator obtains, based on the first instruction, the information (known information) about the carrier signal transmitted in the first environment, to obtain the known state and the known information that are associated with each other and that are related to the first instruction.

The user may operate the assistance device (for example, a terminal device), and the assistance device receives an operation of the user and inputs, in response to the operation of the user, the first instruction from the user to the central coordinator. Alternatively, the user directly operates the central coordinator, and the central coordinator obtains the first instruction from the user in response to the operation of the user. Alternatively, the user may operate a node other than the central coordinator, and the node receives an operation of the user and inputs, in response to the operation of the user, the first instruction from the user to the central coordinator.

In some embodiments, the first input may indicate location information of a target area and information about a target object in the target area, where the target area is an area included in the entire first environment or a partial area in the first environment. That is, the first input carries the location information of the target area and the information about the target object in the target area. When the first input indicates the location information of the target area and the information about the target object in the target area, the central coordinator obtains the location information of the target area and the information about the target object in the target area that are indicated by the first input, that is, may obtain the information (known state) about the target object in the first environment when receiving the first input, and the central coordinator obtains, based on the first input, the information (known information) about the carrier signal transmitted in the first environment, to obtain the known state and the known information that are associated.

In this embodiment of this application, when the organism inputs the first input, the first input may directly indicate the information about the target object in the first environment, including that there are two persons in a kitchen area in the current first environment, and the first input indicates that there are two persons in a kitchen. For example, the first environment shown in FIG. 2 is used as an example, and the first input is the first instruction. The first instruction may indicate that the target object exists in the living room, or indicate that there are two persons in the kitchen, or indicate that a target object A in the bedroom B lies in a bed, or the like. The central coordinator obtains the information (known state) that is about the target object in the first environment and that is indicated by the first instruction, and the central coordinator obtains, based on the location information of the target area in the first instruction, the information (known information) about the carrier signal transmitted in the target area.

The following describes a scenario in which the first input is triggered by the organism.

Scenario 1: After an operator (or the user) completes deployment and commissioning of a power line and a node in the first environment, the operator performs training in an unmanned state, and records information about a carrier signal in the first environment when the first environment is in the unmanned state. Specifically, the operator may input the first instruction to the central coordinator in the foregoing manner, where the first instruction indicates that no target object exists in the current first environment, and obtain the carrier signal transmitted in the first environment. The central coordinator obtains, in response to the first instruction, the information about the carrier signal transmitted in the first environment. For example, the central coordinator may control a node in the power line network to send or receive a carrier signal, to obtain the carrier signal transmitted in the first environment, and obtain known information based on the obtained information about the carrier signal. The central coordinator stores the known information and a corresponding known state (no target object exists in the first environment). When the central coordinator controls the node in the power line network to send or receive the carrier signal, a control policy for at least two nodes in the wired communication system or the power line network may be any one of single-transmit and multi-receive, single-transmit and single-receive, or multi-transmit and multi-receive.

Scenario 2: After an operator (or the user) completes deployment and commissioning of a power line and a node in the first environment, the operator performs training in a manned state, and records information about a carrier signal in the first environment when the first environment is in the manned state. Specifically, the operator may input the first instruction to the central coordinator in the foregoing manner, where the first instruction indicates that the target object exists in the current first environment, and obtain the carrier signal transmitted in the first environment. The central coordinator obtains, in response to the first instruction, the information about the carrier signal transmitted in the first environment. For example, the central coordinator may control a node in the power line network to send or receive a carrier signal, to obtain the information (known information) about the carrier signal transmitted in the first environment. The central coordinator stores the known information and a corresponding known state (the target object exists).

Scenario 3: The first instruction may indicate a location of the target object. An operator or the user moves in different areas in the first environment, the operator or the user uploads a location of an area in which the operator or the user is located to the central coordinator, and after obtaining the location of the area in which the operator or the user is located (that is, a target area location), the central coordinator obtains the information of the carrier signal transmitted at the location of the operator or the user. The first environment shown in FIG. 2 is used as an example. The operator is located in a dining area, and inputs the first instruction to the central coordinator via the assistance device (for example, the terminal device). The central coordinator obtains, in response to the first instruction, information about a carrier signal transmitted in the dining area. For example, the whole-home smart host 201 may control the first smart lamp 211 to send a carrier signal, and the carrier signal may be radiated to the dining area through the power line. In this case, the router 203 may obtain, through air transmission and power line transmission, the carrier signal transmitted by the first smart lamp 211. The whole-home smart host 201 obtains information (known information) about the carrier signal that is transmitted by the first smart lamp 211 and received by the router 203. The central coordinator stores the known information and a corresponding known state (the target object exists in the dining area). By analogy, after moving to the living room, the operator continues to input the first instruction to the central coordinator via the assistance device (for example, the terminal device), where the first instruction indicates that the target object exists in the current living room. By analogy, the central coordinator continues to obtain information about a carrier signal transmitted in the living room.

Scenario 4: The first instruction may indicate a quantity of target objects. The first environment shown in FIG. 2 is used as an example, an operator may input a first instruction to the central coordinator via the assistance device (for example, the terminal device), where the first instruction indicates that two target objects exist in the current dining area. The central coordinator obtains, in response to the first instruction, information about a carrier signal transmitted in the dining area. For example, the whole-home smart host 201 may control the first smart lamp 211 to send a carrier signal, and the router 203 obtains the carrier signal transmitted by the first smart lamp 211. The whole-home smart host 201 obtains information (known information) about the carrier signal that is transmitted by the first smart lamp 211 and received by the router 203. The central coordinator stores the known information and a corresponding known state (two target objects exist in the dining area). Related information of another region in the first environment is obtained by analogy.

Scenario 5: The first instruction in the scenario 1 to the scenario 4 is input by the user with sensing, and a first instruction in the scenario 5 may be input by the user without sensing. The first environment shown in FIG. 2 is used as an example. The whole-home smart host 201 has a control interface. When the user leaves home and no person is at home, the user performs an operation in the control interface. For example, the user taps a "one-touch leave mode" control, and the whole-home smart host 201 obtains a first instruction from the user. The whole-home smart host 201 may obtain a known state (no target object exists in the current first environment) based on the first instruction. The whole-home smart host 201 may automatically perform training to obtain information about a carrier signal transmitted in the first environment, to record information about a corresponding carrier signal (a known object) when no target object exists in the first environment, and further update or establish a sensing model based on the obtained known information and the obtained known state.

In this embodiment of this application, the wired communication system further includes the assistance device. The assistance device communicates with the first electronic device (that is, the central coordinator), and the historical information that is associated with the first environment and that is obtained by the first electronic device includes: information that is about the target object in the first environment and that is obtained from the assistance device. The assistance device may directly provide the information about the target object in the first environment to the central coordinator. If the assistance device detects that the target object exists in an area in which the assistance device is located, the assistance device may output, to the central coordinator, that the target object exists in the area in which the assistance device is located. The assistance device may further provide data collected by the assistance device, and the central coordinator obtains the information about the target object in the first environment based on the data collected by the assistance device. For example, the assistance device is a human body detector. After detecting a human body, the human body detector outputs corresponding data to the central coordinator, and the central coordinator obtains the information about the target object in the first environment based on the data output by the human body detector.

In this embodiment of this application, the first input may be triggered by the assistance device, and the first input may indicate information that is related to the target object in the first environment and that is provided by the assistance device. For example, the first input includes a second instruction, where the second instruction may be an instruction output when the assistance device detects that the target object exists in the first environment. The second instruction may indicate the information about the target object in the first environment. The central coordinator obtains the information (known state) that is about the target object in the first environment and that is indicated by the second instruction, and the central coordinator obtains, based on the second instruction, the information (known information) about the carrier signal transmitted in the first environment, to obtain the known state and the known information that are associated with each other and that are related to the second instruction.

For example, the first environment shown in FIG. 2 is used as an example. The smart door lock 209 detects that a person inputs a password and the password is successfully input, and the door lock is opened. In this case, the smart door lock 209 inputs a second instruction to the whole-home smart host 201. The second instruction indicates that the target object exists in the first environment, and the whole-home smart host 201 obtains the carrier signal transmitted in the first environment. For example, the whole-home smart host 201 controls the router 203 to transmit a carrier signal, the first smart lamp 211, the second smart lamp 212, and the smart television 202 all receive the carrier signal transmitted by the router 203. The whole-home smart host 201 obtains information about the carrier signal that is transmitted by the router 203 and received by the first smart lamp 211, the second smart lamp 212, and the smart television 202, and obtains the known information based on the information about the carrier signal received by each node. The whole-home smart host 201 records the known information present when the target object exists in the first environment.

In this embodiment of this application, the second instruction may further include location information of the assistance device. The central coordinator determines the location information of the assistance device based on the second instruction, and obtains the information about the carrier signal transmitted in the area in which the assistance device is located, to obtain the known information.

For example, the first environment shown in FIG. 2 is used as an example. The camera 210 located in the porch detects that a person exists at a location of the camera 210. In this case, the camera 210 inputs a second instruction to the whole-home smart host 201. The second instruction indicates that the target object exists in an area (porch) in which the camera 210 is located. The whole-home smart host 201 obtains the information about the carrier signal in the area (porch) in which the camera 210 is located. For example, the whole-home smart host 201 controls the router 203 to transmit a carrier signal, and the second smart lamp 212 receives the carrier signal transmitted by the router 203. The whole-home smart host 201 obtains information about the carrier signal received by the second smart lamp 212, to obtain the known information.

In some embodiments, the central coordinator may further periodically train the sensing model based on a preset periodicity. The central coordinator obtains the carrier signal in the first environment in real time based on the preset periodicity, to obtain the information about the carrier signal. The central coordinator may further determine, by integrating attributes of all devices in the wired communication system, whether a person exists in the first environment. The attribute of the device further includes a working state or a power-on/off state of the device. For example, the central coordinator has a central device function, and the central coordinator detects that commonly used devices or devices whose quantity reaches a preset threshold in the wired communication system are all in a power-off state, and determines that no person exists in the first environment.

In some embodiments, the first input may alternatively be an input triggered by any node in the first environment. For example, when the node in the first environment detects the information about the target object in the first environment, the node transmits the detected information to the central coordinator, and the central coordinator obtains the first input. For specific content, refer to the foregoing triggering of the assistance device. In some embodiments, the central coordinator may further obtain the carrier signal in the first environment in real time based on the preset periodicity, and determine, based on the sensing model, whether a person exists in the first environment. If it is detected during periodic training that the target object exists in the first environment, a tracking node near a location of the target object is determined, and information about a carrier signal received by the tracking node is obtained.

This embodiment of this application has at least the following effects: First information and a first state that are associated can be obtained by the user with sensing or without sensing, to establish or update the sensing model, and continuously optimize and train the sensing model, so that the sensing model is more robust, and accuracy and efficiency of the sensing model are improved.

### Sensing phase

Refer to FIG. 4. A target object sensing method provided in an embodiment of this application is described by using an example.

Step S41: A central coordinator obtains first information.

The first information is information associated with a first carrier signal, and the first carrier signal is a carrier signal that is loaded by a first node in a wired communication system or a power line network to a wired link.

The first node is any one of at least two nodes in the wired communication system or the power line network. The information associated with the first carrier signal includes: information associated with the first carrier signal that is transmitted by the first node and received by another node different from the first node in the at least two nodes.

For example, the first node transmits a first carrier signal a1, and the first carrier signal a1 that is transmitted by the first node and received by the another node different from the first node in the at least two nodes is a first carrier signal a2. In this case, information associated with the first carrier signal a1 includes information about the first carrier signal a2. The first carrier signal a1 is a carrier signal transmitted by the first node to the another node in the wired communication system or the power line network, and the first carrier signal a2 is a carrier signal that is transmitted by the first node and actually received by the another node in the wired communication system or the power line network. Information about the first carrier signal a1 may be different from the information about the first carrier signal a2. For example, when the first carrier signal a1 is transmitted in the first environment, phenomena such as reflection, diffraction, scattering, attenuation, and multipath occur on the first carrier signal a1 due to existence of the target object (a person or a thing) in the environment. As a result, features such as an amplitude, a phase, and a spectrum of the first carrier signal a2 finally received by the another node change.

The information about the first carrier signal a2 may include one or more of the following: a signal power of the first carrier signal a2, a channel state of the first carrier signal a2, amplitude information of the first carrier signal a2, phase information of the first carrier signal a2, a time-frequency feature of the first carrier signal a2, a signal-to-noise ratio of the first carrier signal a2, a transmission rate of the first carrier signal a2, a bit error rate of the first carrier signal a2, and feature information of the first carrier signal a2. In some embodiments, the information associated with the first carrier signal may further include information about the first carrier signal. As shown in the foregoing example, information associated with the first carrier signal a1 further includes the information about the first carrier signal a1.

In this embodiment of this application, the first information includes any one of the following information: information about a carrier signal transmitted by the first node, or information about a carrier signal that is transmitted by the first node and received by the another node different from the first node, or information about a carrier signal transmitted by the first node and information about a carrier signal that is transmitted by the first node and received by the another node different from the first node.

It may be understood that, when obtaining the information about the carrier signal transmitted in the first environment, the central coordinator may establish or update a sensing model based on the information about the carrier signal and the corresponding known state, and may also sense the target object in the first environment based on the information about the carrier signal and the sensing model (which may be an established sensing model, or may be a sensing model that is not updated, or may be an updated sensing model).

For a manner in which the central coordinator obtains the information associated with the first carrier signal, refer to related content of obtaining the information about the carrier signal transmitted in the first environment. For example, the central coordinator may obtain second information in response to an instruction input by a user. The first environment shown in FIG. 2 is used as an example. When the user goes home, the user operates a "home arrival mode" in the control interface of the whole-home smart host 201. In this case, the central coordinator may obtain an instruction in response to the operation of the user, and further obtain the corresponding second information based on the obtained carrier signal. After obtaining the second information, the central coordinator may implement tracking (for example, determining a movement trajectory of the target object) on the target object or confirmation on a quantity of target objects based on the obtained second information and the sensing model.

Alternatively, the central coordinator may obtain the second information in response to an instruction sent by an assistance device. For example, the first environment shown in FIG. 2 is used for description. The smart door lock 209 detects that a person inputs a password and the password is successfully input, and the door lock is opened. In this case, the smart door lock 209 inputs an instruction to the whole-home smart host 201. The whole-home smart host 201 obtains, in response to the instruction of the smart door lock 209, the carrier signal transmitted in the first environment. For example, the whole-home smart host 201 controls the router 203 to transmit a second carrier signal, and the first smart lamp 211, the second smart lamp 212, and the smart television 202 all receive the second carrier signal transmitted by the router 203. The whole-home smart host 201 obtains the second carrier signal received by the first smart lamp 211, the second smart lamp 212, and the smart television 202, and obtains the corresponding second information based on the second carrier signal received by each node. After obtaining the second information, the central coordinator may implement tracking (for example, determining a movement trajectory of the target object) on the target object or confirmation on a quantity of target objects based on the obtained second information and the sensing model.

For another example, the central coordinator may obtain the carrier signal in the first environment in real time based on a preset periodicity, and then sense the target object in the first environment, establish the sensing model, or update the sensing model based on the obtained carrier signal. For example, when the user inputs a sensing instruction, a preset periodicity T may be set, and the central coordinator may perform periodical sensing based on the preset periodicity T that is set. Specifically, the central coordinator may periodically detect, based on the preset periodicity T, whether the target object exists in the first environment. If the target object exists, a tracking node near a location of the target object is determined, the second carrier signal received by the tracking node is obtained, and then the corresponding second information is obtained based on the received second carrier signal, to subsequently determine the information about the target object based on the obtained second information and the sensing model, for example, determine the movement trajectory of the target object.

Step S42: The central coordinator determines the second information that matches the first information and that is in historical information associated with the first environment. The second information is information associated with a historically obtained second carrier signal. When the second carrier signal is transmitted in the first environment, the information about the target object in the first environment is a known state.

The historical information associated with the first environment includes known information and the known state corresponding to the known information (as shown in Table 1). For the historical information associated with the first environment, refer to the foregoing related content. Details are not described herein again. The central coordinator determines the second information that matches the first information and that is in the historical information associated with the first environment, that is, the central coordinator determines, based on the sensing model, the second information that matches the first information. The sensing model includes the historical information associated with the first environment.

The sensing model (the historical information associated with the first environment) may be stored in a first electronic device, or may be stored in a database corresponding to the first electronic device, or may be stored in a cloud server. For content of the sensing model, refer to the foregoing descriptions. Details are not described herein again.

In this embodiment of this application, when a similarity between the second information and the first information reaches a preset threshold, it is determined that the second information matches the first information; or when the second information is the same as the first information, it is determined that the second information matches the first information. The preset threshold may be set based on an actual situation. This is not specifically limited in this application. A manner of obtaining the similarity between the first information and the known information includes but is not limited to: a cosine similarity, a Euclidean distance, a Jaccard correlation coefficient, and the like.

Specifically, obtaining the similarity between the first information and the known information includes: For each piece of known information in the sensing model, the central coordinator obtains the similarity between the first information and the known information; and when the similarity is greater than or equal to the preset threshold, the central coordinator determines that the known information matching the first information is the second information. As shown in Table 1, the sensing model includes known information corresponding to three first carrier signals, that is, the known information includes: known information (channel state a1) corresponding to a carrier signal A, known information (signal power b1 and channel state b2) corresponding to a carrier signal B, and known information (signal power c1, channel state c2, and amplitude information c3) corresponding to a carrier signal C. If it is detected that a similarity between the first information and the known information of the carrier signal A reaches the preset threshold, it is determined that the second information matching the first information is information about the carrier signal A. Alternatively, if it is detected that the first information is the same as the known information corresponding to the carrier signal A, it is determined that the second information matching the first information is the known information corresponding to the carrier signal A.

Step S43: The central coordinator determines, based on the known state corresponding to the second information, information about the target object in the first environment when the first carrier signal is transmitted in the first environment.

In this embodiment of this application, when the first information matches the second information, it is determined that when the first carrier signal is transmitted in the first environment, the information about the target object in the first environment is the known state corresponding to the second information. For example, the first information matches the second information, and when the known state corresponding to the second information indicates that no target object exists in the first environment, the central coordinator determines that when the first carrier signal is transmitted in the first environment, the information about the target object in the first environment is that no target object exists in the first environment.

In some embodiments, when it is determined that the target object exists in the first environment, the central coordinator may obtain the information about the target object in the first environment based on the first carrier signal. For example, the central coordinator may determine a location of the target object based on a location of a node that transmits the first carrier signal and a location of a node that receives the first carrier signal. Specifically, a reflection and transmission attenuation signal that meets a human body feature exists between a receiving node that receives the carrier signal and a transmitting node that transmits the carrier signal. A transceiver pair is formed between a plurality of transmitting nodes and receiving nodes, and location information of the target object is obtained based on a location of the node in the transceiver pair and the received carrier signal. The first environment shown in FIG. 2 is used as an example. The target object is located in a living room. The router 203 transmits a carrier signal. The smart television 202, the smart curtain 204, and the smart host 201 all receive the carrier signal transmitted by the router 203. The smart host 201 determines, based on the carrier signals that are transmitted by the router 203 and that are received by the smart television 202 and the smart curtain 204, that the received carrier signal has the reflection and transmission attenuation signal that meet the human body feature, and determines that the target object exists in the living room.

In this embodiment of this application, when the known state corresponding to the second information indicates the location information of the target object, the central coordinator determines that when the first carrier signal is transmitted in the first environment, the information about the target object in the first environment is the location information indicated when the target object is in the known state corresponding to the second information. If the known state corresponding to the second information indicates that the location information of the target object is a, it is determined that the target object exists in the first environment when the first carrier signal is transmitted in the first environment, and the target object is located at a location a. When it is determined that the target object exists in the first environment when the first carrier signal is transmitted in the first environment, the central coordinator may obtain the information about the target object in the first environment based on the first carrier signal. For example, when the known state corresponding to the second information indicates the location information a of the target object, the central coordinator determines the tracking node based on the location information a of the target object, and further obtains the carrier signal of the tracking node, to continuously track the target object. For another example, as shown in the foregoing example, the node that receives the first carrier signal is determined, and then the location of the target object is determined based on the location of the node.

In some embodiments, when it is determined that the target object exists in the first environment, the central coordinator obtains a target location of the target object in the first environment, then the central coordinator obtains, based on the target location, a carrier signal transmitted at the target location, and the central coordinator updates the sensing model or senses the target object based on the carrier signal transmitted at the target location.

In some embodiments, when it is determined that the target object exists in the first environment, obtaining the target location of the target object in the first environment includes: when it is detected that the user triggers a node in the wired communication system to transmit a carrier signal, determining that the target object exists in the first environment; and using a location of the node as the target location.

In some embodiments, when the location information of the target object in the first environment is obtained based on the sensing model and the second information, the carrier signal in the first environment is obtained based on the location information of the target object, and the target object is sensed based on the obtained carrier signal. Specifically, the tracking node in the first environment is determined based on the location information of the target object, where a location of the tracking node is related to the location of the target object, and the tracking node may include two or more nodes. The tracking node is controlled to transmit or receive a carrier signal. The carrier signal received by the tracking node is obtained.

In some embodiments, when the first carrier signal or the second carrier signal is transmitted, a receive-transmit state of the at least two nodes included in the wired communication system or the power line network may be controlled to be any one of single-transmit and multi-receive, single-transmit and single-receive, or multi-transmit and multi-receive.

Implementation of this embodiment of this application brings the following technical effects:
The target object is sensed by using the sensing model, to avoid a process in which the carrier signal needs to be analyzed each time to sense the target object, reduce a calculation amount, and improve efficiency. In addition, in the process of sensing the target object, the sensing model may also be updated in real time, and the sensing model is continuously optimized and trained, so that the sensing model is more robust, and accuracy and efficiency of the sensing model are improved.

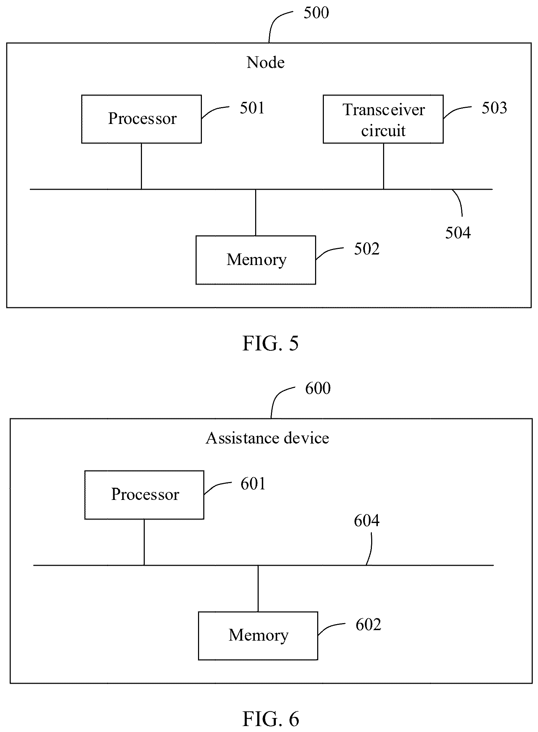

Refer to FIG. 5. A structure of a node provided in an embodiment is described by using an example. The node is the node in the power line network shown in FIG. 1 or FIG. 2. The node 500 shown in FIG. 5 can perform the steps in the method shown in FIG. 3 or FIG. 4. As shown in FIG. 5, the node 500 includes a processor 501, a memory 502, and a transceiver circuit 503.

The components in the node 500 are coupled together through a bus system 504. In addition to a data bus, the bus system 504 further includes a power bus, a control bus, and a status signal bus. However, for clarity of description, various buses are denoted as the bus system 504 in FIG. 5.

The methods disclosed in embodiments of the present invention may be applied to the processor 501, or may be implemented by the processor 501. The processor 501 may be an integrated circuit chip and has a signal processing capability. In an implementation process, the steps in the foregoing methods may be implemented by using a hardware integrated logic circuit in the processor 501 or by using instructions in a form of software. The processor 501 may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, the steps, and logical block diagrams that are disclosed in embodiments of the present invention. The general-purpose processor may be a microprocessor, or the processor may be any conventional processor or the like. The steps of the method disclosed with reference to embodiments of the present invention may be directly performed by a hardware decoding processor, or may be performed by using a combination of hardware in the decoding processor and a software module. The software module may be located in a mature storage medium in the art, such as a random access memory (Random Access Memory, RAM), a flash memory, a read-only memory (Read-Only Memory, ROM), a programmable read-only memory, an electrically erasable programmable memory, a register, or the like. The storage medium is located in the memory 502. A program stored in the storage medium includes instructions for performing the method shown in FIG. 3 or FIG. 4 or a stored sensing model. The processor 501 reads the instructions in the memory 502, and completes the steps of the foregoing methods in combination with hardware of the processor.

The transceiver circuit 503 is configured to send or receive a carrier signal. The processor 501 is configured to obtain first information, where the first information is information associated with a first carrier signal, and the first carrier signal is a carrier signal loaded by a first node in the at least two nodes to the wired link; determine second information that matches the first information and that is in historical information associated with the first environment, where the second information is information associated with a historically obtained second carrier signal, and information about a target object in the first environment is a known state when the second carrier signal is transmitted in the first environment; and determine, based on the known state corresponding to the second information, information about the target object in the first environment when the first carrier signal is transmitted in the first environment.

Refer to FIG. 6. A structure of an assistance device provided in an embodiment is described by using an example. The assistance device 600 shown in FIG. 6 can perform the steps performed by the assistance device in the method shown in FIG. 3 or FIG. 4. As shown in FIG. 6, the assistance device 600 includes a processor 601 and a memory 602.

The components in the assistance device 600 are coupled together through a bus system 604. In addition to a data bus, the bus system 604 further includes a power bus, a control bus, and a status signal bus. However, for clarity of description, various buses are denoted as the bus system 604 in FIG. 6.

The methods disclosed in embodiments of the present invention may be applied to the processor 601, or may be implemented by the processor 601. The processor 601 may be an integrated circuit chip and has a signal processing capability. In an implementation process, the steps in the foregoing methods may be implemented by using a hardware integrated logic circuit in the processor 601 or by using instructions in a form of software. The processor 601 may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of the present invention. The general-purpose processor may be a microprocessor, or the processor may be any conventional processor or the like. The steps of the method disclosed with reference to embodiments of the present invention may be directly performed by a hardware decoding processor, or may be performed by using a combination of hardware in the decoding processor and a software module. The software module may be located in a mature storage medium in the art, such as a random access memory (Random Access Memory, RAM), a flash memory, a read-only memory (Read-Only Memory, ROM), a programmable read-only memory, an electrically erasable programmable memory, a register, or the like. The storage medium is located in the memory 602. A program stored in the storage medium includes instructions for performing the method shown in FIG. 3 or FIG. 4 or a sensing model. The processor 601 reads the instructions in the memory 602, and completes the steps of the foregoing methods in combination with hardware of the processor.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of the present invention may be integrated into one processing unit, or each of the units may exist alone physically, or two or more units are integrated into one unit.

When functions are implemented in a form of a software functional unit and sold or used as an independent product, the functions may be stored in a computer-readable storage medium. Based on such an understanding, the technical solutions of the present invention essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

In this application, that A corresponds to B may be understood as that A is associated with B, or A and B have an association relationship. It should be understood that division into manners, cases, categories, and embodiments in embodiments of this application is merely for ease of description, and should not constitute a special limitation. Features in various manners, categories, cases, and embodiments may be combined without contradiction. It should be further understood that "first" and "second" in embodiments of this application are only for a distinguishing purpose and shall constitute no limitation on this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The foregoing storage medium includes: any medium that can store program code, for example, a USB flash drive, a removable hard disk drive, a read-only memory (read-only memory, ROM), a random access memory (random access memory, RAM), a magnetic disk, or an optical disc.

It may be understood that various numbers in embodiments of this application are merely used for differentiation for ease of description, and are not used to limit the scope of embodiments of this application. The foregoing embodiments provided in this application are not intended to limit this application. Any modification, equivalent replacement, or improvement made without departing from the spirit and principle of this application shall fall within the protection scope of this application.

## Claims

1. A target object sensing method, performed by a first electronic device and applied to a wired communication system, wherein the wired communication system comprises at least two nodes in a first environment, the at least two nodes are connected through a wired link, the node is configured to transmit or receive a carrier signal, and the method comprises:
obtaining first information, wherein the first information is information associated with a first carrier signal, and the first carrier signal is a carrier signal loaded by a first node in the at least two nodes to the wired link;
determining second information that matches the first information and that is in historical information associated with the first environment, wherein the second information is information associated with a historically obtained second carrier signal, and information about a target object in the first environment is a known state when the second carrier signal is transmitted in the first environment; and
determining, based on the known state corresponding to the second information, information about the target object in the first environment when the first carrier signal is transmitted in the first environment.

2. The method according to claim 1, wherein the method further comprises:
obtaining, based on a first input, information about the target object in the first environment and information about a carrier signal transmitted in the first environment, wherein the first input is triggered by an organism, and the obtained information about the target object in the first environment and the obtained information about the carrier signal transmitted in the first environment are used to determine the historical information associated with the first environment.

3. The method according to claim 2, wherein the first input is used to indicate a third carrier signal, and the third carrier signal is a carrier signal transmitted by a second node in the wired communication system in response to triggering of the organism; and
obtaining, based on the first input, the information about the target object in the first environment comprises:
obtaining an attribute of the second node based on the first input; and
determining the information about the target object in the first environment based on the attribute of the second node.

4. The method according to any one of claims 1 to 3, wherein the wired communication system further comprises an assistance device, the assistance device communicates with the first electronic device, and the historical information associated with the first environment comprises: information that is about the target object in the first environment and that is obtained from the assistance device.

5. The method according to any one of claims 1 to 4, wherein another node different from the first node in the at least two nodes are configured to receive the first carrier signal transmitted by the first node, and the information associated with the first carrier signal comprises: information about the carrier signal received by the another node.

6. The method according to claim 5, wherein there are one or more other nodes.

7. The method according to any one of claims 1 to 6, wherein the information about the carrier signal comprises one or more of the following information:
a signal power, a channel state, amplitude information, phase information, a time-frequency feature, a signal-to-noise ratio, a transmission rate, a bit error rate, and feature information, wherein the feature information is information obtained by performing feature extraction on one or more of the signal power, the channel state, the amplitude information, the phase information, the time-frequency feature, the signal-to-noise ratio, the transmission rate, and the bit error rate.

8. The method according to any one of claims 1 to 7, wherein the known state in the historical information associated with the first environment comprises any one or more of the following states:
no target object exists in the first environment, the target object exists in the first environment, a location of the target object in the first environment, a quantity of target objects, a posture of the target object, and a movement trajectory of the target object.

9. The method according to any one of claims 1 to 8, wherein the wired link is a power line.

10. The method according to any one of claims 1 to 9, wherein determining the second information that matches the first information and that is in the historical information associated with the first environment comprises:
when a similarity between the second information and the first information reaches a preset threshold, determining that the second information matches the first information; or when the second information is the same as the first information, determining that the second information matches the first information.

11. The method according to any one of claims 1 to 10, wherein the target object is a living body or a non-living body.

12. The method according to any one of claims 1 to 11, wherein the method further comprises:
updating, based on newly obtained information about the target object in the first environment and newly obtained information about the carrier signal transmitted in the first environment, the historical information associated with the first environment.

13. The method according to any one of claims 1 to 12, wherein the first electronic device is one of the at least two nodes.

14. A wired communication system, wherein the wired communication system comprises a first electronic device and at least two nodes, the at least two nodes are connected through a wired link to form a wired network, the first electronic device communicates with the at least two nodes, the node is configured to transmit or receive a carrier signal, and the first electronic device is configured to perform the method according to any one of claims 1 to 13.

15. The wired communication system according to claim 14, wherein the wired communication system further comprises at least one assistance device, and the assistance device communicates with the first electronic device.

16. The wired communication system according to claim 14 or 15, wherein the first electronic device accesses the wired network in a wired or wireless manner.

17. An electronic device, wherein the electronic device comprises a memory and at least one processor, the memory is configured to store instructions, and the processor is configured to execute the instructions to implement the method according to any one of claims 1 to 13.

18. A computer-readable storage medium, wherein the computer-readable storage medium stores a program, and the program enables an electronic device to perform the method according to any one of claims 1 to 13.

19. A computer program product, wherein the computer program product comprises computer-readable instructions, and when the computer-readable instructions are executed by one or more processors, the method according to any one of claims 1 to 13 is implemented.
